# EUROPEAN PATENT APPLICATION

(11) **EP 4 663 480 A1**
(43) Date of publication of application: **17.12.2025**
(21) Application number: 24181058.9
(22) Date of filing: 10.06.2024
(51) Int. Cl.: B60Q 3/14, B60Q 3/64, B60R 13/00, B60R 13/02, F21S 43/14, F21S 43/20, F21S 43/31, F21S 43/40, F21W 104/00

(54) **VEHICLE ILLUMINATION DEVICE AND ILLUMINATED STRUCTURAL COMPONENT COMPRISING THE DEVICE**

(71) Applicant: Hella Autotechnik Nova s.r.o., 78985 Mohelnice (CZ)
(72) Inventor: Simicek, Marek, 779 00 Olomouc (CZ); Tucek, Pavel, 779 00 Olomouc (CZ)

(57) **Abstract**

Vehicle illumination device and a structural component (3) with the device. The device has an inner part (1), an outer part (4) and a primary optical element (6) for insertion into a through hole (25) in the structural component (3) between the two parts. The outer part (4) comprises a secondary optical element (10) and outcoupling elements (11). A light-exit end (8) of each primary optical element (6), receiving light from a light source (9) in the inner part (1), is placed in a cavity (15) in a back surface (12) of the secondary optical element (10) and comprises at least one reflection wall (17) for reflecting light towards the outcoupling elements (11). The outcoupling elements (11) extend along the structural component (3) and reflect light towards a front surface (13) of the primary optical element (10).

## Description

### Technical field

The present invention relates to vehicle lamps intended for guiding light through a vehicle component, such as a sheet forming a part of a vehicle body, where light sources are located on the inner side of the component, which is not exposed to viewers.

### Background of the Invention

Vehicle lamps intended for exterior generally require a through hole in a body of the vehicle to transfer power to the lamp. En example of illuminated hood emblem with power transferred to light sources through a hole in the hood is described in document US2012256543A1. A disadvantage of having a light source on the exterior with power provided by a cable inserted through a hole in the hood is that the exterior part of the lamp needs to be relatively larger to accommodate the light source as well as any required optical elements.

Instead of guiding electrical power through the hole, light can be transferred by a lightguide from the inner side to the outer side of the panels forming the vehicle body. An example of such an approach is described in document US5709453A, where a plate-shaped lightguide is used to guide light from the inside of the vehicle to the outside via an aperture between panels forming an outer shell of the body. This approach can however only be used to illuminate a light strip on the exterior, it is not very suitable for illumination of other shapes with a sufficient homogeneity. The required aperture is also quite large, so this approach is suitable only for illuminating areas between different vehicle panels where such an aperture does not significantly compromise vehicle construction or stability of the panels.

It would therefore be advantageous to provide a solution which could be used to illuminate complicated shapes, such as emblems with manufacturer name or logo, and which would not significantly deteriorate mechanical stability of the vehicle component provided with this illumination solution.

### Summary of the Invention

The shortcomings of the solutions known in the prior art are to some extent eliminated by a vehicle illumination device comprising an inner part for placement to an inner side of a vehicle structural component, an outer part for placement to an outer side of the structural component and at least one primary optical element for insertion into a through hole in the structural component.

Each primary optical element is from at least partially transparent material for guiding light between the inner part and the outer part. I.e., the primary optical element is a lightguide, and during operation it leads light from the inner part to the outer part, which forms the visible part of the device. Polycarbonate or PMMA is a suitable material, glass or other transparent or translucent materials can also be used.

Each primary optical element comprises a light-entry end for placement into the inner part, and a light-exit end for placement into the outer part. These ends can be flat or curved, can contain diffusing or homogenizing optical elements, such as micro-optics, graining, grooving etc. The light-exit end can also include surfaces configured for directing the exiting light by their shape or inclination or by being provided with further optical elements, e.g., of the types mentioned above.

The inner part comprises at least one light source for illuminating the light-entry end of each primary optical element. If multiple primary optical elements are used, each can have its own light source. It is also possible to use a light source shared by multiple primary optical elements, e.g. with reflecting light inside of the inner part towards both light-entry ends. An LED is a preferable type of light source.

The outer part comprises a secondary optical element from at least partially transparent material, and outcoupling elements. The secondary optical element defines the shape of the illuminated area of the device, i.e., it defines what the device looks like to a viewer. It can thus be shaped into one or more symbols, such as letters or logos. The secondary optical element, optionally with a shielding element, can preferably be the only directly visible part of the device when viewed from the outside.

The outcoupling elements can be formed by shape and/or by a reflective material. Preferably, they are surface elements, shaped and oriented together with the light-exit end to send light towards the front surface as homogenously as possible. They can be individually shaped, i.e., each of the elements can have its own shape or orientation such that it receives a portion of the light and sends it where it is needed. Such elements can be designed by computer simulation software known to skilled persons. The optical elements can be pillow-shaped, teeth-shaped, groove-shaped, freeform-shaped etc. They can be micro-optical elements, e.g. with length and/or width of each element less than 1 mm, which allows the elements to be designed with improved homogeneity.

The secondary optical element comprises a back surface for attachment to the vehicle structural component, a front surface for outputting light from the device into an output direction, and at least one cavity in the back surface for receiving the light-exit end of at least one primary optical element. When the device includes multiple primary optical elements, it can have multiple secondary optical elements and/or a secondary optical element with multiple cavities and/or a secondary optical element with a cavity which receives multiple light-exit ends.

Each cavity is delimited by at least one cavity wall which forms a light-entry surface of the secondary optical element. The cavity can be cylindrical, hemispherical, rectangular, polyhedral, conical, pyramidical, freeform etc. The back surface is shaped according to the shape of the outer side of the structural component for which the device is intended. E.g., it can be planar, or slightly curved. It can be e.g., glued to the component, but also bolted, welded etc. Gluing is preferable since it is relatively uncomplicated type of connection and can ensure watertightness of the device, to prevent any water or dirt from entering the vehicle through the through hole. The front surface is the main illuminated surface, possibly the only illuminated surface, of the device. It has a shape corresponding to the desired shape of illumination.

The light-exit end of each primary optical element comprises at least one reflection wall for reflecting light from the light-entry end into at least one direction along the back surface of the secondary optical element. The reflection wall(s) can reflect light by total internal reflection and/or by being coated with a reflective material. Each reflection wall can be planar, curved, freeform shaped etc. It can be substantially flat or provided with optical elements for homogenization and/or directing of light. The light-exit end with its reflection wall(s) can have a shape corresponding to the shape of the cavity, e.g., as described above, but can also have a different shape. Outer shape of the light-exit end can be the same as the cross-section of the primary optical element between its ends.

The reflection walls can e.g., have a form of a bevelled part of the light-exit end, or a hollowed part of the light-exit end. For example, there can be a pyramidical recess (with three or more walls forming sides of the pyramid), coaxial with the main propagation direction, and each wall of the recess forms one reflection wall. Similarly, there can be a pyramidical protrusion coaxial with the main propagation direction. These pyramidical shapes are suitable especially for illuminating branched shapes, such as letters. Curved reflection walls can then be more suitable for illuminating areas, e.g., to illuminate a full circle.

The outcoupling elements extend in at least one direction along the back surface of the secondary optical element for reflecting light incoming from the light-exit end of the primary optical element towards the front surface of the secondary optical element. A direction along the back surface is given by a free vector parallel with the back surface or a part thereof. I.e., the outcoupling elements extend along the outer side of the structural component, once the device is mounted to the component, and the reflection wall(s) thus send light towards the elements. The outcoupling elements can thus at least partially surround the entrance of the cavity, or can be inside of the cavity along the outer side of the structural component. They can be arranged in an array or a row, systematically or randomly, as needed to provide any desired illumination. The distribution and shape of the outcoupling elements is partially determined by the reflection wall(s). For example, each wall can have a corresponding array of elements in some direction from the through hole, wherein the elements from this array receive light from the corresponding wall and send it towards some part of the front surface. For example, each reflection wall can have an array of outcoupling elements, such as outcoupling teeth, arranged in rows parallel to the reflection wall.

The device can in some variants have only one primary optical element, while in other variants, it can have multiple primary optical elements, e.g., up to 50 or even more. The number of primary optical elements depends on size of the through holes, on the size of the outer part and the area that needs to be illuminated, on required intensity, on the light sources used for providing the light etc. For example, if the outer part of the device comprises five secondary optical elements, each forming one letter, three primary optical elements might be required to homogenously illuminated each of the letters and 15 primary optical elements are thus used in the device. 15 corresponding through holes are then provided in the vehicle structural component. Circular holes are the easiest to manufacture, but any other shapes can also be used, e.g., square holes or hexagonal holes.

Preferably, each hole has cross-sectional area under 3 square centimetres so that the holes do not threaten mechanical stability of the component. All the holes preferably have the same shape and size. These relatively small holes can be used to illuminate the outer part of the device thanks to the reflection walls and the corresponding outcoupling elements which receive the light transferred through the hole and distribute it to the front surface of the secondary optical element with suitable homogeneity. A suitable homogeneity can be prescribed by design requirements or by legal requirements etc.

Two main variants of the primary optical element(s) are in more detail described below. In a first variant, the primary optical element only serves for receiving the light in the inner part, transferring it through the through hole and sending it in the at least one direction along the back surface of the secondary optical element. The primary optical element has a main propagation direction, which is from the back, where the light source is located, to the front, where the cavity is located. The main propagation direction can be substantially parallel to the output direction of the device, e.g., with a deviation between these two directions of at most 30°.

The main propagation direction preferably corresponds to an axial direction of the respective through hole, the light reflected on the reflection wall(s) is then sent substantially radially along the outer side of the structural component. Substantially radially means that the light is not necessarily exactly parallel with the outer side, i.e., not exactly perpendicular to the main propagation direction, but it travels away from the axis of the through hole, towards the outcoupling elements. Preferably, the light gets closer to the outer side as it travels between the reflection wall and the outcoupling elements, i.e., the light travels slightly backwards, before the outcoupling elements send in to the front. This allows for a more compact outer part. The outcoupling elements in this variant are not a part of the primary optical element, they are located at the back surface of the secondary optical element, or at a further element located along the back surface, e.g., on the component.

The primary optical element can then be inserted through the through hole from the back, since it can have a cross-section of the light-exit end smaller that the through hole, and thus can also be connected to the inner part of the device, even before mounting to the structural component. The mounting can thus be significantly simplified.

A second main variant of the primary optical element has the outcoupling elements included in the primary optical element. The light-exit end is thus wider, it extends in at least one direction, or can branch into multiple directions, along the back surface of the secondary optical element. The cavity is thus also extended as needed to accommodate the light-exit end. The reflection walls thus reflect the light into the extending portion of the light-exit end, which carries the outcoupling element, and only after the reflection by these elements does the light leave the primary optical element, and it enters the secondary optical element when it already travels towards the front surface.

In this variant, the primary optical element still has its main propagation direction as described above, but it also guides the light along the outer surface of the component. The primary optical element thus cannot be inserted from the back and has to be mounted separately from the inner part. It can be firmly connected to the outer part, or can be mounted separately to the component and then covered by the outer part. The shape of the extending part of the light-exit end preferably corresponds to the shape of the outer part, i.e., of the shape that needs to be illuminated.

The device according to the invention can thus be mounted to a vehicle structural component, such as a hood, trunk lid or interior wall. It is partially on an inner side of the structural component and partially on an outer side, and the component has a through hole for each primary optical element. The electronical components of the device (PCB with light sources, heat sink, sensors etc.), are thus on the inside, and the outer part, which is visible, can thus be smaller and formed mostly from the secondary optical element which ensures the desired illumination. The through holes can be relatively small and still ensure relatively homogeneous illumination over a relatively wide area, thanks to the reflection walls, which reflect the light in the radial direction(s) towards the outcoupling elements, and thanks to the outcoupling elements which send the light towards the front surface with increased homogeneity. Any desired shape of an illumination element, such as letters, numbers, or logos, can thus be illuminated without taking unnecessary space on the outer side and without compromising stability or rigidity of the structural component more than acceptable.

The outcoupling elements are advantageously configured to reflect majority of light received from the reflection wall of the primary optical element directly without further reflection out of the device through the front surface of the secondary optical element. The secondary optical element then does not guide most of the light along its length via total internal reflection, but the light passes directly through as oriented by the outcoupling elements.

The outer part can further comprise a shielding element partially covering the secondary optical element. The shielding element can for example be paint or metallization. The shielding element can cover side walls of the secondary optical element, to prevent any light from leaving the device in lateral directions. It can alternatively or additionally cover parts of the front surface, e.g., in order to create a desired pattern of illumination. For example, the secondary optical element can be oval-shaped, with the whole oval illuminated by one or more primary optical elements, and the shielding element then creates a car manufacturer name on the oval illuminated surface. The shielding element can be reflective on the inside, to return any shielded light back so that it can be outputed through a non-shielded part of the surface. It can also be non-reflective, e.g., black, to limit light reflection so that most of the outputted light is sent directly from the outcoupling elements in a controlled manner determined by the design of the outcoupling elements.

The shielding part can be discontinuous on the front surface, e.g., it can have a form of a grid, to limit light intensity, a form of a certain pattern to define the desired illumination shape etc. The outcoupling elements are then preferably shaped and/or oriented for directing most of the light towards the unshielded parts of the front surface.

A shielding element can also be provided for the reflection walls, to limit how much light can pass through the wall. It can be absorbing or reflective.

As mentioned above, the primary optical element has a main propagation direction which extends from the light source towards a bottom of the cavity during operation of the device. Preferably, at least one reflection wall of at least one primary optical element has, at most of its surface area, an inclination angle α with respect to the main propagation direction of between 30 and 75 degrees. Preferably, multiple reflection walls of the device have this feature, e.g., most of them or even all of them. This inclination is suitable for reflecting light in the radial direction towards the outcoupling elements. For curved reflection walls, the inclination can change along the surface, but it can still mostly be in the above-given range.

The device can comprise at least two primary optical elements in total (i.e., including the at least one defined above). Each of the primary optical elements has the main features as defined above, i.e., it has the light-entry end and light-exit end and serves for guiding light through a through hole towards outcoupling elements. The outcoupling elements then preferably form multiple outcoupling areas along the back surface of the secondary optical element, wherein each outcoupling area corresponds to one primary optical element for reflecting light from the corresponding primary optical element towards the front surface of the secondary optical element. These areas can e.g., have the form of arrays as mentioned above.

Having multiple primary optical elements allows for providing more light to the outer part and can provide more homogeneous illumination even to secondary optical elements with complicated shapes. Each primary optical element and its corresponding area of outcoupling elements can then be individually adapted for illumination of a certain corresponding part of the secondary optical element, such as illumination of one part of a number or a letter or one whole letter etc. Relatively small through holes in the structural component can thus be used to provide light for any desired shape of illumination pattern.

At least two different primary optical elements then can have differently shaped and/or oriented reflection walls, for illuminating differently shaped parts of the secondary optical element around the light-exit ends of the different primary optical elements.

For devices with multiple secondary optical elements, number of primary optical elements for each of the secondary optical elements is preferably chosen such that all the secondary optical elements have as similar light intensity as possible. E.g., larger secondary elements have more primary optical elements than smaller ones. The number of primary optical elements for each of the secondary optical elements can thus at least partially depend on surface area of the respective secondary optical element.

When viewed from the output direction, a part of the (or of some, if there are more of them) secondary optical element around the light-exit end of one primary optical element can extend into N directions, where N is a nonzero natural number, preferably from 1 to 10, more preferably from 1 to 5, wherein the light-exit end of the primary optical element has N reflection walls, each for reflection of light into one of the N directions. For example, if the primary optical element is located in the middle of a K-shaped secondary optical element, N is 4. If there are further primary optical elements at the end of the arms of the letter K, these have N equal to 1, while if they are in the middle of the arms, their N is 2.

The light-exit end can also extend into a range of direction, e.g., into a 180° half circle, in a full circle etc. Reflection wall(s) can then be curved to illuminate such an extended light-exit end.

As mentioned above, the outcoupling elements can be a part of the secondary optical element. This variant has simpler assembly and simpler construction of primary optical elements. The outcoupling elements can then be on the back surface of the secondary optical element.

The inner part can comprise a frame. The light source can then be attached to the frame and the primary optical element can also be attached to the frame. In the first variant of the primary optical element, it can be attached to the frame before mounting to the structural component. The frame thus keeps the inner part together and can facilitate its mounting. The primary optical element can e.g., be glued to the frame, and the frame can be glued to the component. Preferably, the frame encloses the light source(s) such that it blocks light from leaving the device on the inner side of the component.

In the second above-mentioned variant, the light-exit end of the primary optical element, or at least one of the primary optical elements) extends in at least one direction along the back surface of the secondary optical element wherein the outcoupling elements are a part of the primary optical element. This variant can have the advantage that relative position between the reflection wall(s) and the outcoupling elements are not affected by the assembly of the device, because they are all carried by the primary optical element(s).

The device can also have some of its outcoupling elements on the primary optical element(s) (which then have laterally extending light-exit end) and some on the secondary optical element(s), e.g., both variants can be combined in some devices according to the invention.

The outer part can further comprise a homogenization optical element located between a front surface of the light-exit end and the bottom of the cavity. This element is especially suitable for the second variant where it can be located between the front surface and the outcoupling elements. This homogenization optical element can e.g., be a foil with homogenization elements (graining, teeth, grooves etc.) or a plastic plate. For the first variant, it can however also be useful, because it can process any light passing from the light-exit end towards the front surface without contact with the outcoupling elements. This light, which can come directly from the light source, can need more homogenization that the light processed by the outcoupling elements, so the further homogenization can be useful.

The light-exit end of the primary optical element can comprise refractive elements for at least partial refraction of light from the light source. The elements can especially be on the reflection walls - a part of the light will then get reflected, as described above, while part of the light passes through and gets refracted. The output light beam of the whole device thus has an area of reflected light (which comes from the outcoupling elements) and an area of refracted light (which did not contact the outcoupling elements). Refraction elements can especially have the form of micro-optical elements. The light is preferably refracted such that the refracted and reflected parts of the beam have substantially the same intensity and homogeneity.

The shortcoming of solutions known from the state of the art are to some extent also eliminated by an illuminated structural vehicle component comprising an opaque wall and the vehicle illumination device according to the invention. The component can especially be a hood, a tail lid, a further outer panel of the vehicle (plastic or metallic), or an interior panel of a vehicle, e.g., from a side wall or the ceiling. The opaque wall comprises a through hole for each primary optical element of the device, wherein the inner part of the device is attached to an inner side of the component, the outer part of the device is attached to an outer side of the component and each primary optical element passes through a corresponding through hole.

### Description of drawings

A summary of the invention is further described by means of exemplary embodiments thereof, which are described with reference to the accompanying drawings, in which:
- Fig 1.: Shows a schematical sectional view of a first exemplary embodiment of the vehicle illumination device, wherein the sectional plane is parallel to a main illumination output direction of the device.
- Fig 2.: Shows a schematical drawing of a detail from fig. 1, wherein several exemplary light rays are marked in the drawing to show how the light travels from a light source, through primary and secondary optical elements and out of the device in the output direction.
- Fig 3.: Shows a schematical front view of the first embodiment, wherein arrows mark several light rays reflected on reflection walls of the primary optical element into a direction along a back surface of the secondary optical element.
- Fig 4.: Shows a schematical sectional view, analogous to fig. 1, of a second exemplary embodiment of the vehicle illumination device with two primary optical elements.
- Fig 5.: Shows a schematical front view, analogous to fig. 3, of the second embodiment.
- Fig 6.: Shows a schematical front view, analogous to figs. 3 and 5, of a third embodiment in which the primary optical element has three reflection walls for illumination of three arms of a V-shaped secondary optical element.
- Fig 7.: Shows a schematical front view, analogous to figs. 3, 5, and 6, of a fourth embodiment in which two primary optical elements have two reflection walls each, for illumination of a D-shaped secondary optical element.
- Fig 8.: Shows a schematical sectional view, analogous to fig. 1, of a fifth exemplary embodiment with differently shaped light-exit end of the primary optical element.
- Fig 9.: Shows a schematical drawing of a detail from fig. 8, analogous to fig. 2, to demonstrate light propagation in the fifth embodiment.
- Fig 10.: Shows a schematical sectional view, analogous to fig. 1, of a sixth exemplary embodiment, wherein in this embodiment a variant of the primary optical element with laterally extending light-exit end is used.
- Fig 11.: Shows a schematical drawing of a detail from fig. 10, analogous to fig. 2, to demonstrate light propagation in the sixth embodiment.
- Fig 12.: Shows a schematical sectional view, analogous to fig. 10, of a seventh exemplary embodiment with differently shaped primary optical element.
- Fig 13.: Schematically shows a front view of an eight exemplary embodiment of the illumination device, wherein two primary optical elements with interconnected laterally extending light-exit ends are used.
- Fig 14.: Schematically shows a front view of a ninth exemplary embodiment of the illumination device, wherein two primary optical elements with separated laterally extending light-exit ends are used.
- Fig 15.: Shows a schematical drawing of a tenth embodiment in a front view, wherein this embodiment includes three secondary optical elements spelling a car manufacturer name for use as an illuminated car hood emblem, and positions of through holes in the hood for inserting primary optical elements are marked on the secondary optical elements.
- Fig 16.: Shows an eleventh embodiment in a schematic sectional view, wherein this embodiment includes a further homogenization optical element in front of the primary optical element,
- Fig 17.: Shows a twelfth embodiment in a schematic sectional view which also has the homogenization optical element and has a laterally extending light-exit end on its primary optical element.
- Fig 18.: Shows a thirteenth embodiment in a schematic sectional view, wherein this embodiment includes refractive elements on the primary optical element.

### Exemplary Embodiments of the Invention

The invention will be further described by means of exemplary embodiments with reference to the respective drawings.

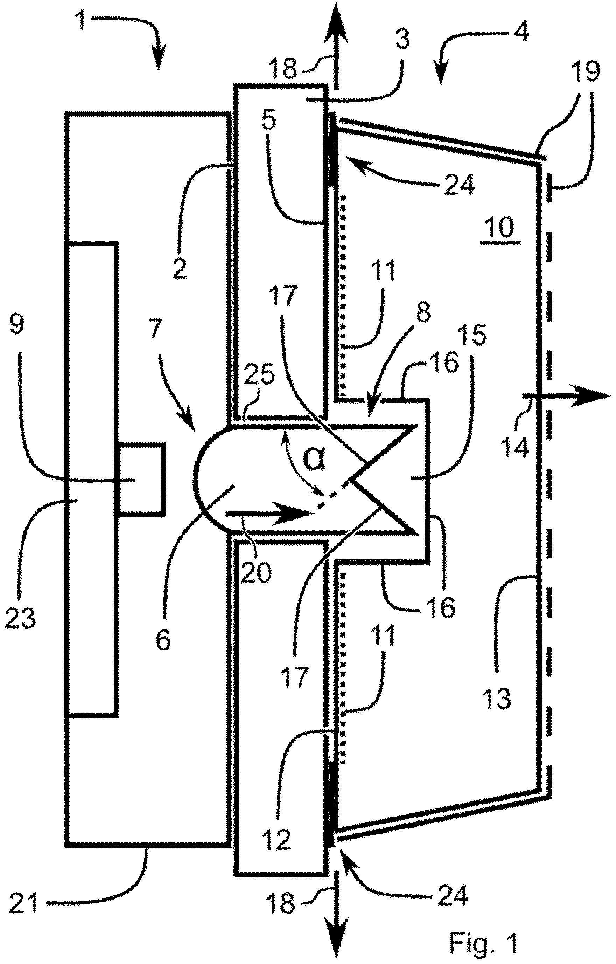

A first exemplary embodiment of the invention is shown in figs. 1 to 3. The vehicle illumination device in this embodiment comprises an inner part 1, an outer part 4, and a primary optical element 6 extending between the parts. The device is shown mounted on a thin flat vehicle structural component 3, such as a front hood of an automobile. The inner part 1 is on an inner side 2 of the structural component 3, i.e., inside of the engine compartment or between two sheets forming a hood, where the outer sheet is the structural component 3 carrying the device. The outer part 4 is on the component's outer side 5, visible for a viewer standing in front of the vehicle with this hood. Illumination pattern of the device in this embodiment, i.e., the lit shape the viewer sees, is a rectangle depicting the letter "I".

The inner part 1 comprises a frame 21, which has the form of an opaque plastic casing enclosing the whole part, a PCB 23 with an LED light source 9, wiring (not shown) providing power to the LED from the vehicle's battery, and an opening on a front side, corresponding by its shape and size to a through hole 25 in the structural component 3 intended for receiving the primary optical element 6. The inner part 1 is glued to the structural component 3, such that the opening and the through hole 25 are coaxial. A precise position of the inner part 1 during mounting is ensured by the primary optical element 6, which has a cross-section corresponding to the circular shape of the through hole 25 and is fixed (by gluing) to the inner part 1 before the mounting. The LED light source 9 has its output direction 14 coaxial with axis of the through hole 25 and it thus directly illuminates the primary optical element 6 in its main propagation direction 20.

The primary optical element 6 in this embodiment has substantially cylindrical shape, is made from a clear polycarbonate, is straight and has two ends. A light-entry end 7 is located in the inner part 1 and is hemispherical. It receives light from the LED and lets it through. The light is then guided by a middle portion of the primary optical element 6 to a light-exit end 8, which is a main functional part of the element. The light-exit end 8 has a V-shaped recess formed on a front base of the cylindrical shape of the primary optical element 6. The sides of the "V" each form a reflection wall 17, which is inclined by an approximately 40° angle α with respect to the main propagation direction 20. The recess is oriented such that each reflection wall 17 faces towards one end of the I-shaped outer part 4.

The outer part 4 comprises a secondary optical element 10 and a shielding element 19. The secondary optical element 10 has a shape of a short, truncated foursided pyramid. Its back surface 12 corresponds to a larger base of the pyramid and serves for contact with the outer side 5 of the structural component 3. Its opposite front surface 13 is the illuminated surface visible to viewers - all the light leaving the device in this embodiment passes through this front surface 13. The back surface 12 is attached to the structural component 3 by glue 24 at its whole perimeter such that it water-tightly closes the through hole 25. The back surface 12 further has a cylindrical cavity 15 in its center. The cavity 15 is aligned with the through hole 25 and the light-exit end 8 of the primary optical element 6 is located inside of the cavity 15. The cavity 15 thus has two cavity 15 walls 12 a circular front wall and cylindrical side wall, which serve as light-entry surface of the secondary optical element 10.

The secondary optical element 10 further comprises outcoupling elements 11 located on its back surface 12. In this embodiment, the peripheral parts of the back surface 12 contacting the glue 24 do not carry the outcoupling elements 11. These outcoupling elements 11 have the form of teeth made on the surface and they are individually designed by a computer simulation such that each tooth receives some light from one of the reflection walls 17 and reflects it to some area on the front surface 13, such that the whole front surface 13 is substantially homogeneously illuminated. The teeth in this embodiment are arranged in curved rows copying the shape of the cavity 15, and each row has slightly different shape or size of teeth.

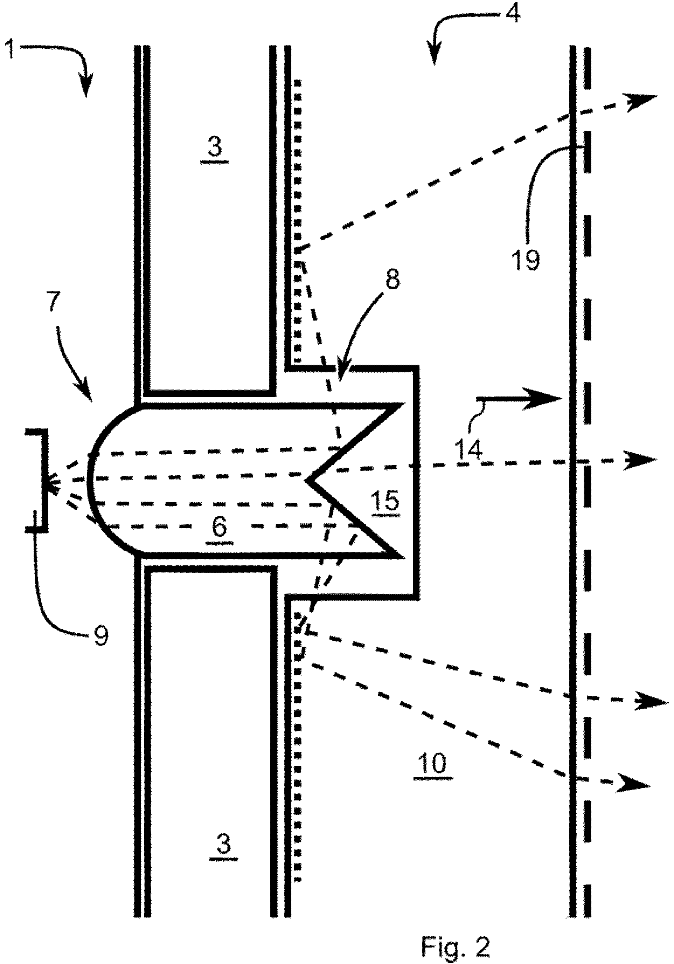

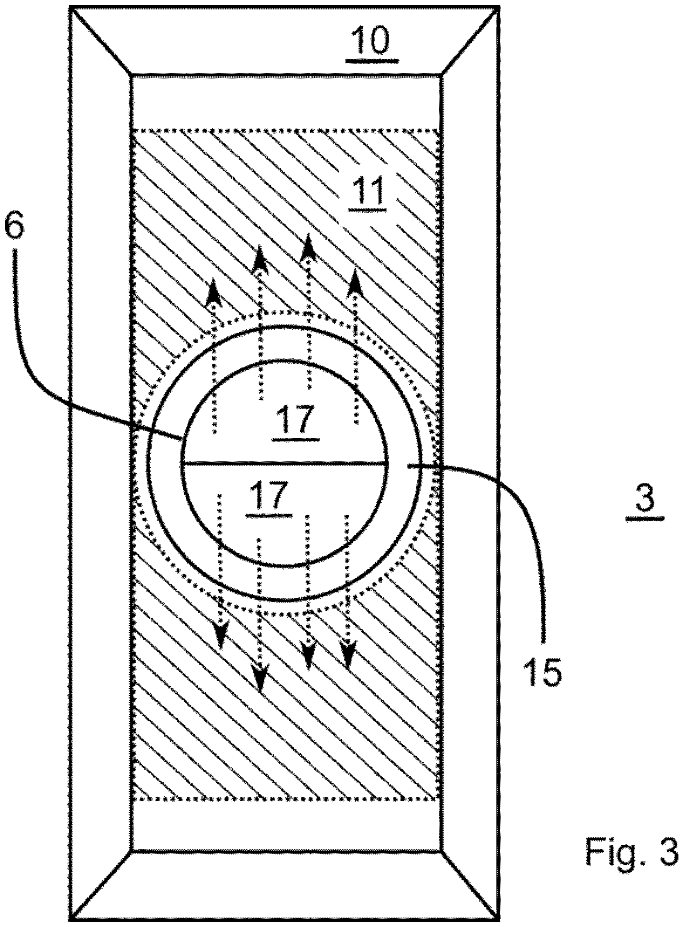

The shielding element 19, which is a black paint, fully covers all four side walls of the secondary optical element 10, and partially covers the front wall. The shielding of the front wall (shown in figs. 1 and 2, not visible in fig. 3) absorbs some of the light and serves mainly a design (aesthetical) purpose. The rows of teeth are oriented such that they reflect most of the light towards the unpainted parts of the front surface 13.

The light in this embodiment thus originates in the light source 9 and enters the primary optical element 6 through the surface of the light-entry end 7. A portion of the light passes through the reflection walls 17 and goes directly to the front surface 13 and out of the device in the output direction 14. Most of the light gets reflected on the reflection walls 17 - a half in one direction 18 along the back surface 12, a half in the opposite direction 18 along the back surface 12. This reflected light is shown in fig. 3 by dotted arrows. The light from the reflection walls 17 is directed towards the outcoupling elements 11, it passes through the side wall of the primary optical element 6, through the cavity 15 wall 16, and the outcoupling elements 11 then reflect the light again, directly towards the front surface 13 and out in the output direction 14. The light from the light source 9 is thus substantially evenly distributed along the non-shielded part of the front surface 13 of the secondary optical element 10. This embodiment thus uses a single light source 9 with a single primary optical element 6 to illuminate the front surface 13.

Each surface, through which the light passes or on which it is reflected, can at least to some extent change direction of the light, and the computer simulation used to design the outcoupling elements 11 is thus also used to design the shape and inclination of the reflection walls 17, and is provided with the shapes of the other surface so that they can be considered in the simulation and the light is thus sent through the actual device according to the simulation. The optical parts of the device can then be manufactured, e.g., injection moulded, according to shapes provided by the simulation, assembled into the two parts, and mounted to the structural component 3.

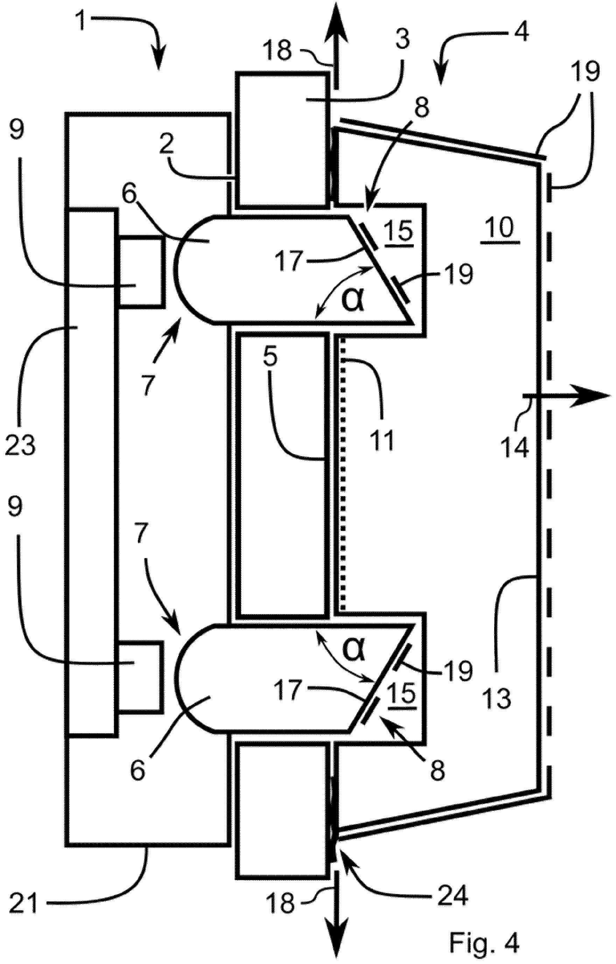

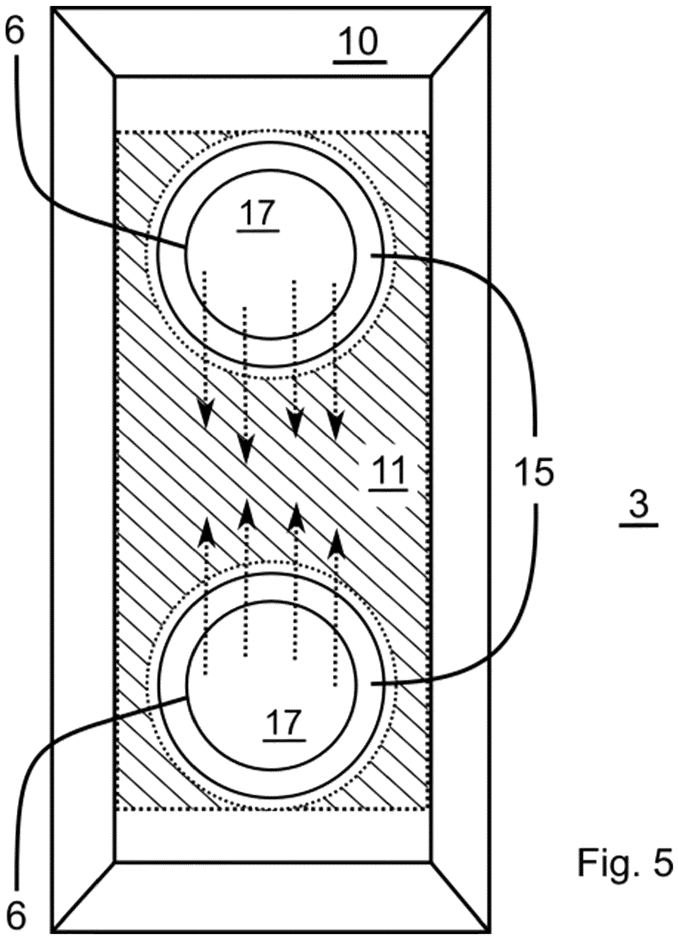

A second embodiment of the invention is shown in figs. 4 and 5. This embodiment differs from the first embodiment in the following: There are two LED light sources 9 and two primary optical elements 6. Each primary optical element 6 only has one reflection wall 17, which is flat and inclined with respect to the main propagation direction 20 by around 35°. Each reflection wall 17 also has a shielding element 19, which is reflective and limits direct illumination of the front surface 13 by the light source 9. The through holes 25 in the structural component 3 and thus the primary optical elements 6 are placed such that the reflection walls 17 are at the end of the "I"-shape of the secondary optical element 10.

There are two cylindrical cavities 15, one for each light-exit end 8. Light is directed from each reflection wall 17 towards the middle area, i.e., towards the other primary optical element 6. The middle area is provided with outcoupling elements 11. The outcoupling elements 11 are divided into two areas - one for each reflection wall 17. These areas overlap to some extent, such that there are outcoupling elements 11 which have two sides and each side reflects light from a different reflection wall 17.

The secondary optical element 10 is thus illuminated from its ends towards the center, not from the center as in the first embodiment. For an outside viewer however, the difference is only noticeable as an increase in light intensity in the second embodiment, caused by having double the number of LEDs. The rest of the features of the second embodiment is the same or analogous as in the first embodiment, light propagation through the device uses the same principles and the specific shapes and arrangements of the optical elements (especially the outcoupling elements 11 and the reflection walls 17) are provided by a computer simulation.

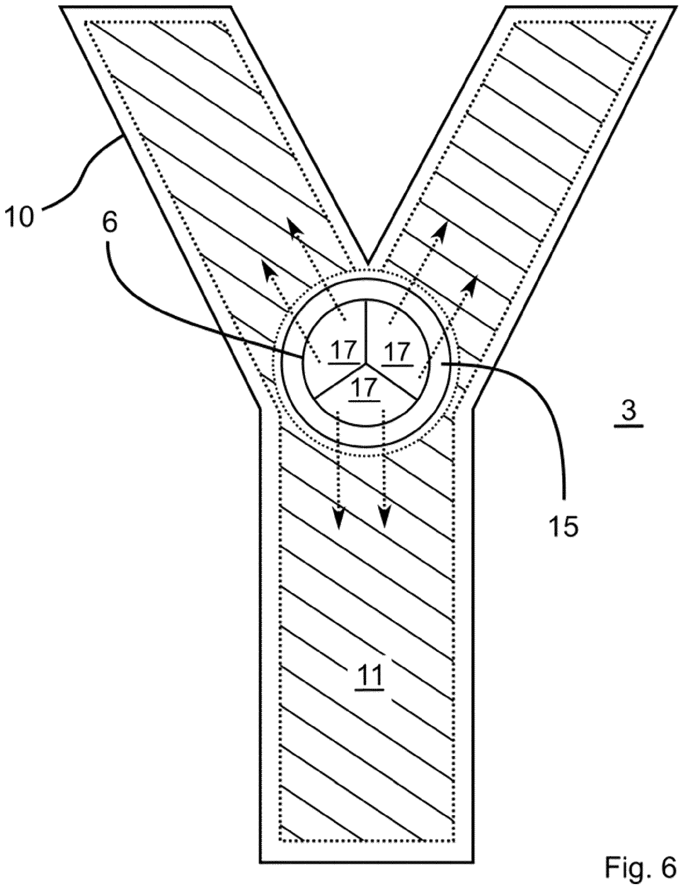

A third exemplary embodiment is shown in fig. 6. It differs from the first embodiment in shape of the secondary optical element 10 and in corresponding shape of the light-exit end 8 of the primary optical element 6. The secondary optical element 10 is Y-shaped. It thus has three branches, each of which is illuminated by one reflection wall 17. The light-exit end 8 thus has three reflection walls 17, its recess has the shape of a three-sided pyramid.

Each of the branches has its corresponding area of outcoupling elements 11 shaped and oriented in accordance with the respective reflection wall 17, and all three branches are thus substantially homogenously illuminated by one light source 9. Fig. 6 shows how the light is reflected from each reflection wall 17 towards the respective branch with its outcoupling elements 11 shown by the hatched surface.

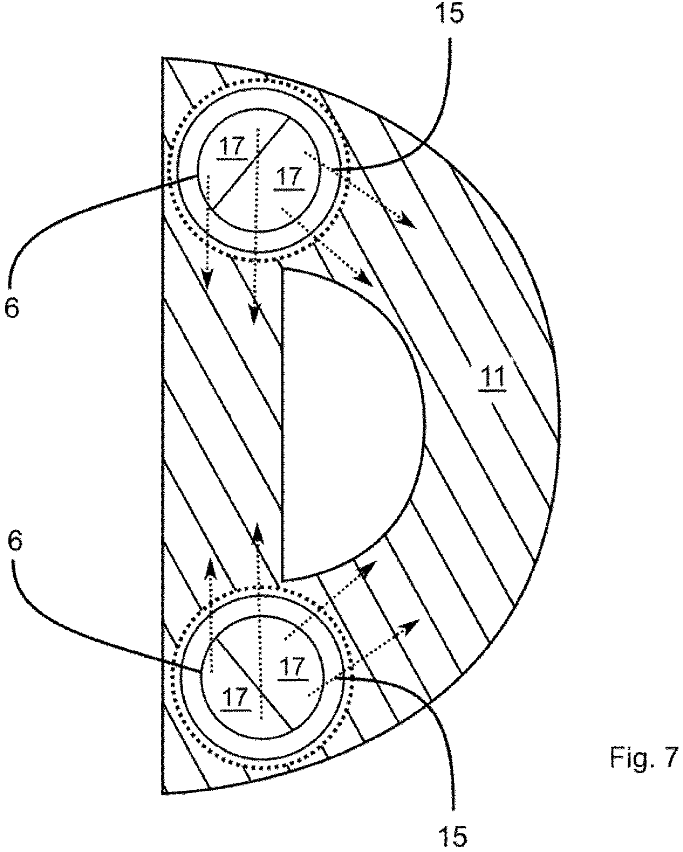

A fourth exemplary embodiment is shown in fig. 7. It differs from the second embodiment in the shape of the secondary optical element 10, which is D-shaped here, and in shape of the light-exit ends 8. The primary optical elements 6 are located in the corners of the D-shape, and direct part of their light into the straight section of the letter D and the rest into the curved section. Each light-exit end 8 thus has a V-shaped recess, similar to the first embodiment. The outcoupling elements 11 are divided into four areas, each containing an array of elements. Two areas in the straight section, one for each primary optical element 6, and two areas are in the curved section. The elements are again designed to provide a substantially homogeneous illumination over the whole D-shape of the secondary optical element 10.

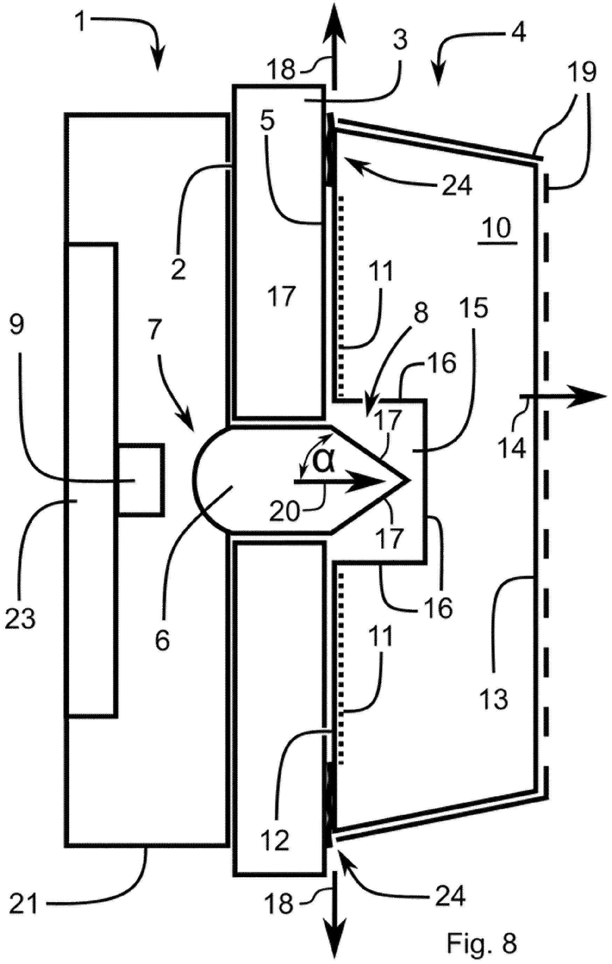

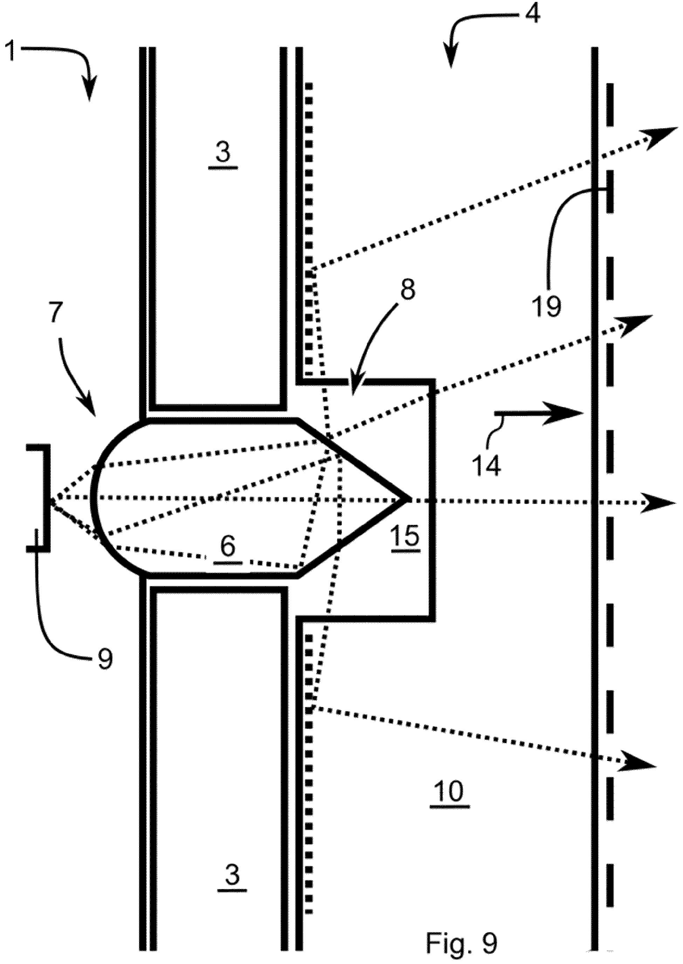

A fifth exemplary embodiment is shown in figs. 8 and 9. This embodiment only differs from the first embodiment in the shape of the light-exit end 8 of the primary optical element 6 and in corresponding shape of the outcoupling elements 11. The reflection walls 17 in this embodiment are still arranged to send light into two opposite directions to illuminate the I-shaped secondary optical element 10, but they are arranged such that the light-exit end 8 has a sharp tip instead of a protrusion. The light-exit end 8 is V-shaped and each reflection wall 17 reflects light through the other wall and then out of the primary optical element 6 (see fig. 9). The reflection walls 17 are not smooth but have micro-optical prisms on their surface to enable light reflection for the light incoming from the light source 9 and to enable the light from the other reflection wall 17 to pass through.

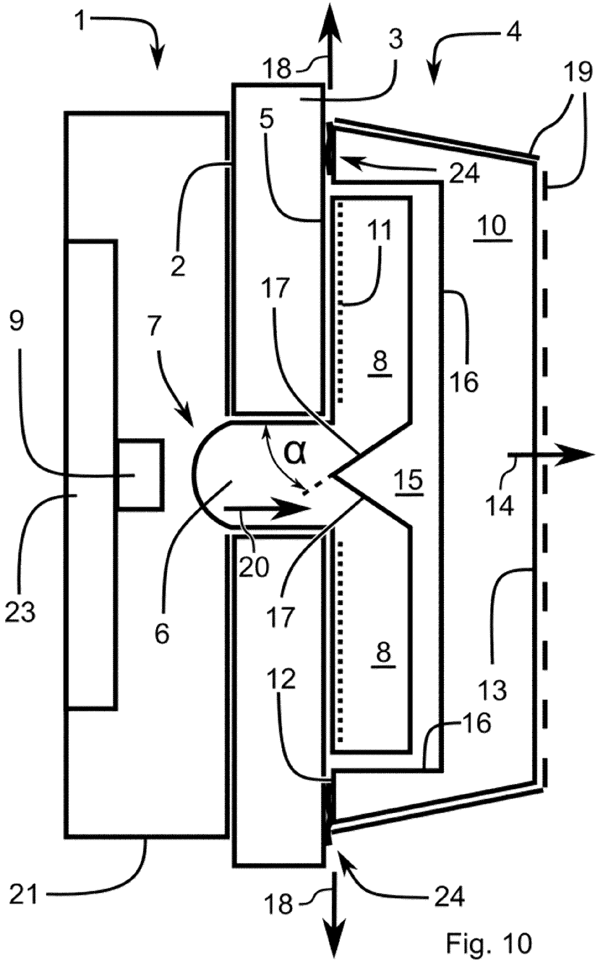

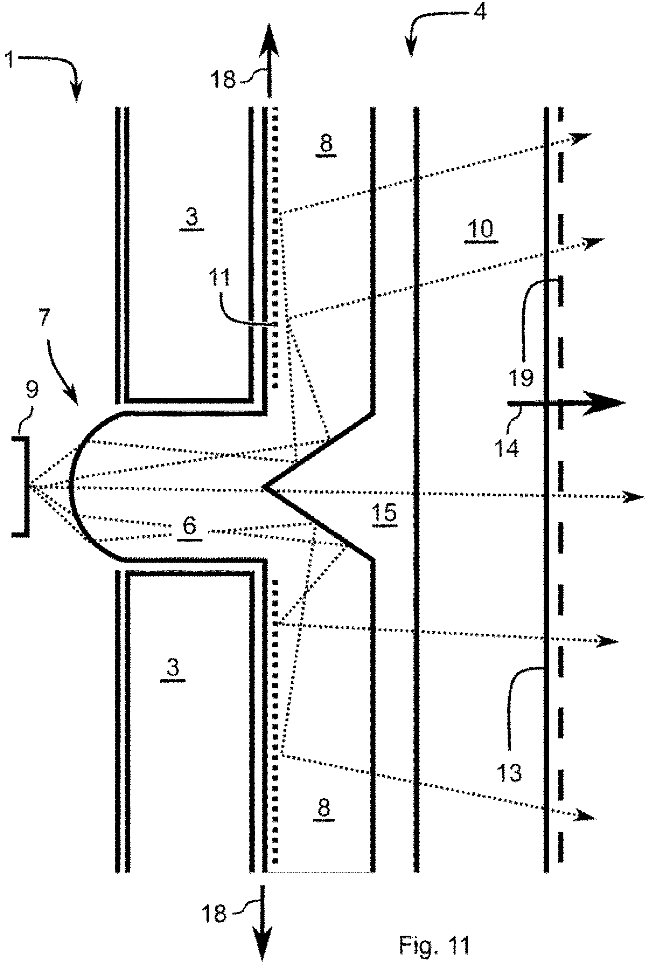

A sixth exemplary embodiment is shown in figs. 10 and 11. This embodiment has the inner part 1 constructed in the same way as the first embodiment, except that the primary optical element 6 is not attached to the frame 21. The primary optical element 6 has its light-exit end 8 branched in two directions, corresponding to two ends of an I-shaped secondary optical element 10. The light-exit end 8 thus extends along the outer side 5 of the structural component 3, perpendicularly to the main propagation direction 20. There is a V-shaped recess forming the reflection walls 17, similarly to the first embodiment. The outcoupling elements 11are located on a back surface 12 of the extended light-exit end 8, i.e., they are still distributed along the outer side 5 of the structural component 3, in the direction 18 along the back surface 12 of the secondary optical element 10, but they are not attached to the secondary optical element 10 in this embodiment.

The outcoupling elements 11 are designed in the same way as in the first embodiment, they reflect light incoming from the reflection walls 17 towards the bottom of the cavity 15 and towards the front surface 13 of the secondary optical element 10. The cavity 15 is elongated, and its bottom serves as a light-entry surface of the secondary optical element 10.

A portion of the light again passes through the reflection walls 17 directly towards the front surface 13. The rest is processed analogously to the first embodiment, as shown in fig. 11, and from the outside, the illumination device appears substantially the same as in the first embodiment.

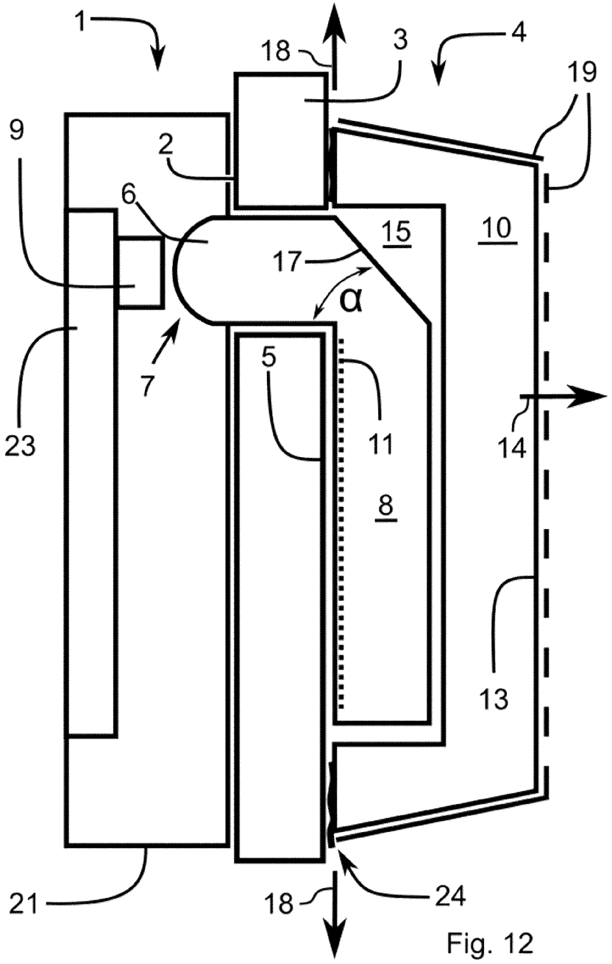

A seventh exemplary embodiment is shown in fig. 12. It uses the extended variant of the primary optical element 6, similarly to the sixth embodiment, but the element only extends in one direction and the through hole 25 is located at one end of the I-shape of the outer part 4, not in the middle. The outcoupling elements 11 are shaped such that the illumination intensity is substantially constant along the whole length of the device. There is thus only one reflection wall 17 in this embodiment. Other features of this embodiment are the same as in the previous embodiment.

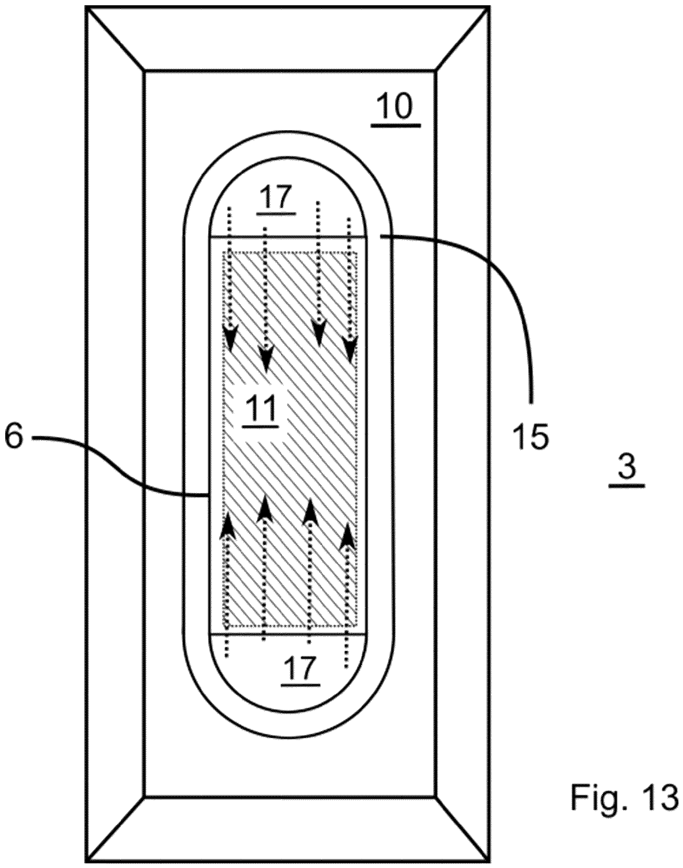

An eight embodiment is shown in fig. 13. This embodiment combines features from fig. 4 with features from fig. 12. There are two primary optical elements 6, located at the ends of the I-shaped secondary optical element 10 when viewed from the front. Both primary optical elements 6 have laterally extending light-exit end 8, which extends towards and is connected to the other light-exit end 8. When viewed from the side, both primary optical elements 6 thus form a single U-shaped piece of material. The inner part 1 thus has two LED light sources 9 and there are two through holes 25 in the structural component 3. The outcoupling elements 11 are made on the back surfaces 12 of the light-exit ends 8 and the reflection walls 17 reflect light towards each other.

The secondary optical element 10 has one elongated cavity 15 accommodating both light-exit ends 8, and its outer shape and connection to the structural component 3 is the same as in the first embodiment.

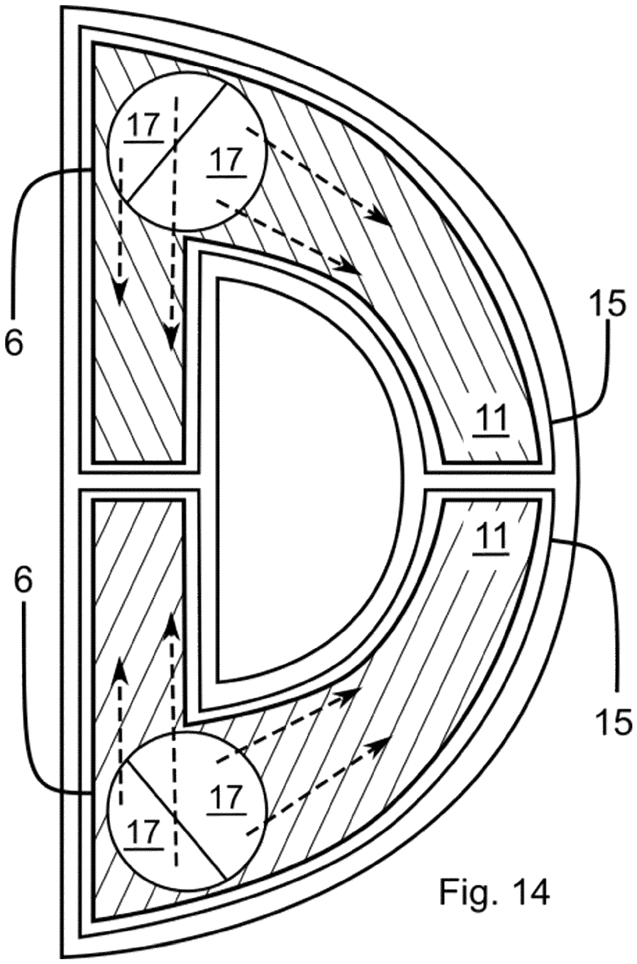

A ninth exemplary embodiment is shown in fig. 14. It combines the features of the embodiment from fig. 7 with the features from fig. 12. The secondary optical element 10 is D-shaped and there are two through holes 25 and two primary optical elements 6. Each light-exit end 8 is branched into one straight branch and one curved branch, and has its own branched cavity 15 forming a half of letter D. The reflection walls 17 are formed by a recess, each wall directing light into one of the extending branches.

The outcoupling elements 11 are placed on the primary optical elements 6 and direct light towards the front surface 13 as in all the previous embodiments, and the front surface 13 is substantially homogenously illuminated in the desired D-shaped pattern.

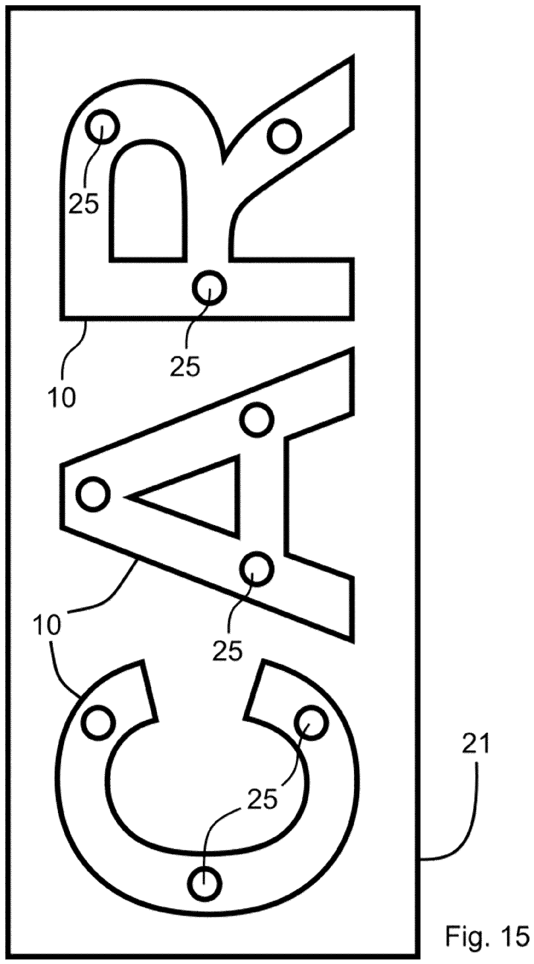

A tenth embodiment of the invention is depicted in fig. 15. This embodiment can be realised with the first variant of the primary optical elements 6, as in embodiments 1-5, and/or with the second, laterally (radially) extended, variant of the primary optical elements 6 as in embodiments 6-9. There are three secondary optical elements 10, each in a shape of a letter, such that the device spells a word marking a car manufacturer name. Positions of through holes 25 in the structural component 3 are shown in fig. 15 - each secondary optical element 10 has three corresponding holes for three primary optical elements 6. The through holes 25 are positioned such that the letters can be fully illuminated.

Some primary optical elements 6 have three reflection walls 17, such as the two at the lower half of the letter A, some have two reflection walls 17, such as the one in the tip of the letter A, and some only have one, such as the ones at the ends of the letter C. Light-exit ends 8 can be extended along the branches forming the letters or not, the outside illumination appears the same in both variants. The inner part 1 of the lamp has a casing enclosing all nine light sources 9. The secondary optical elements 10 are each glued to the structural component 3 individually, with the three through holes 25 precisely delimiting their positions.

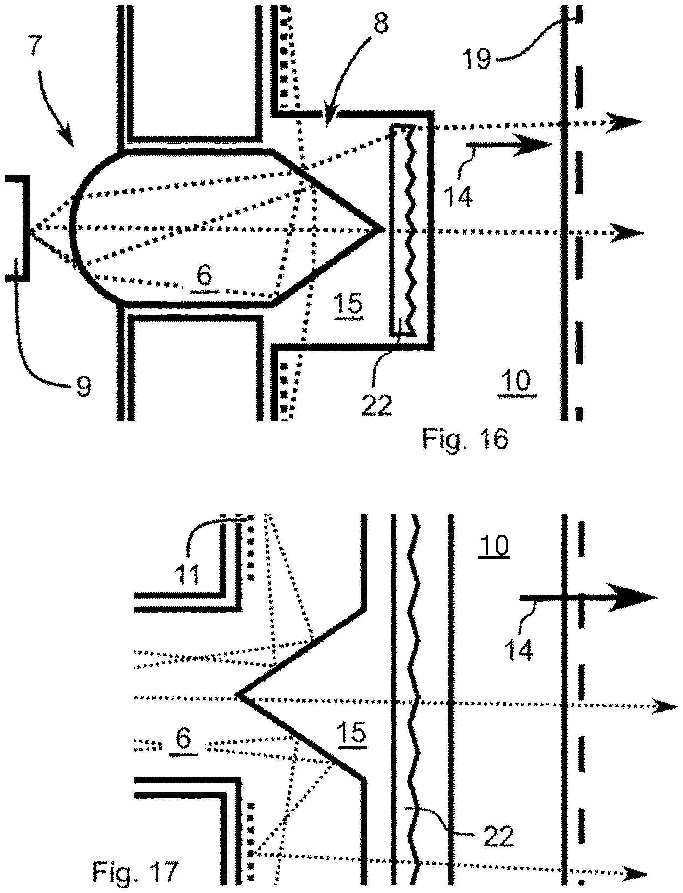

Fig. 16 shows an eleventh embodiment of the invention which is a variant of the embodiment from figs. 8 and 9, with added further homogenization optical element 22 between the primary optical element 6 and the secondary optical element 10. The homogenization optical element 22 is a piece of clear material, e.g., the same material which forms the other optical elements, attached to the bottom of the cavity 15. A front surface of the homogenization optical element 22 is provided with light-scattering protrusions to improve homogeneity of any light that passes through the reflection walls 17 without total reflection. This embodiment thus prevents a bright spot caused by a direct visibility of the light source 9 through the primary optical element 6 and the secondary optical element 10.

Analogously, fig. 17 shows a twelfth embodiment which is a modification of the embodiment from fig. 10, with an addition of a further homogenization optical element 22 extending along the primary optical element 6 parallelly with the outer side 5 of the structural component 3. All the light reflected by the outcoupling elements 11 towards the front surface 13 passes through the homogenization optical element 22, which is a foil with graining attached to the front surface 13 of the primary optical element 6.

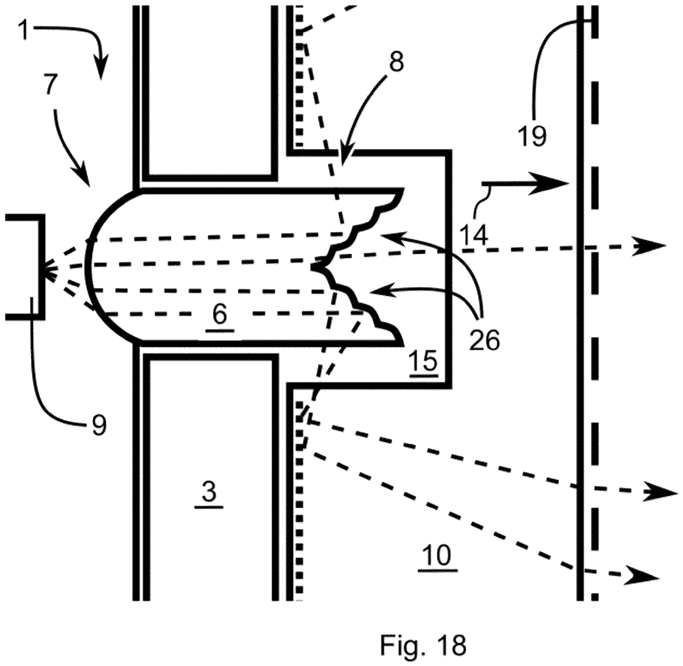

Fig. 18 shows a thirteenth embodiment, which is the same as the first embodiment except that there are refractive elements 16 in the form of micro-optics provided on both reflection walls 17. A part of the light undergoes refraction and passes through the walls, and the elements are designed such that the light is provided with the same homogeneity and intensity as the light reflected on the reflection walls 17 and then by the outcoupling elements 11.

A fourteenth embodiment of the invention is a vehicle hood, formed by a metal sheet, for covering an engine compartment of an automobile. The hood is an exemplary structural component 3 for a vehicle and is provided with multiple circular through holes 25 and with the device according to any above embodiments, e.g., the tenth embodiment. An exemplary number of the through holes 25 is thus nine, for attaching the three-letter illumination device from fig. 15. The through holes 25 are formed in the middle of a front area of the hood. The inner part 1 of the device is glued to the inner side 2 of the hood, the outer part 4 is glued to the outer side 5, and all the primary optical elements 6 pass through.

### Alternative embodiments:

In an alternative to the embodiments from figs. 1-9, the cavities 15 are prism shaped, i.e., they have planar walls, so that the cavity 15 walls 16 have less impact on direction of the light passing through. Other features of these alternative embodiments can be the same as shown in the corresponding figures.

In alternative embodiments, the through holes 25 and/or the primary optical elements 6 can have a non-circular shape. E.g. they can be hexagonal, square, elliptical, etc. In further alternative embodiments, the secondary optical element 10 can be from a clear material, from a coloured material, from a smoky material etc., while the other features of the device can be the same as described above. Multicolour LEDs can be used in some embodiments to provide for different colours of illumination. There can also be multiple light sources 9 for each primary optical element 6, e.g., to increase brightness or allow for different colours.

While in the depicted embodiments each reflection wall 17 corresponds to one branch of the overall illumination shape, in further embodiments, some reflection walls 17 can be shaped such that they send light to multiple branches, and/or some branches can be illuminated by multiple reflection walls 17.

In embodiments with multiple secondary optical elements 10, the elements can be interconnected to facilitate easier mounting. This connection can be done by making them from the same piece of material, and shielding the connecting portions to prevent them from affecting the illumination appearance.

The angle α defining inclination of the reflection walls 17 can have different values in different embodiments, depending on position of the outcoupling elements 11, shape of the outer side 5 of the structural component 3, orientation of the through hole 25, beam angle of the light source 9 etc. Values of α between 30 and 75 degrees are suitable for most applications, but embodiment with values outside of this range are also possible.

Instead of a hood, the structural component 3 can be any other component, preferably a substantially flat and relatively thin vehicle component. E.g., for an interior illumination, a panel forming a part of a dashboard can be the component, or a panel forming a side wall lining.

In an alternative embodiment, the light source 9 is not located directly behind the through hole 25, i.e., the axis of the through hole 25 does not intersect the light source 9. The light source 9 can be directed towards light-entry end 7 from a radial direction, and the light-entry end 7 can then optionally comprise an inclined entry surface oriented towards the light source 9. The light-entry end 7 can also extend in radial direction, analogously to the extended light-exit end 8 from some of the above embodiments. Preferably, only one of the ends is extended, to facilitate easier mounting. The inner part 1 can be provided with a reflector for guiding the light to the primary optical element 6.

Further adaptations and modifications of the embodiments described above may be accomplished by one of ordinary skill in the art without departing from the scope of the present invention.

### Reference list

- 1.: Inner part
- 2.: Inner side
- 3.: Structural component
- 4.: Outer part
- 5.: Outer side
- 6.: Primary optical element
- 7.: Light-entry end
- 8.: Light-exit end
- 9.: Light source
- 10.: Secondary optical element
- 11.: Outcoupling elements
- 12.: Back surface
- 13.: Front surface
- 14.: Output direction
- 15.: Cavity
- 16.: Cavity wall
- 17.: Reflection wall
- 18.: Direction along the back surface
- 19.: Shielding element
- 20.: Main propagation direction
- 21.: Frame
- 22.: Homogenization optical element
- 23.: PCB
- 24.: Glue
- 25.: Through hole
- 26.: Refraction elements

## Claims

1. Vehicle illumination device comprising an inner part (1) for placement to an inner side (2) of a vehicle structural component (3), an outer part (4) for placement to an outer side (5) of the structural component (3) and at least one primary optical element (6) for insertion into a through hole (25) in the structural component (3),
• wherein each primary optical element (6) is from at least partially transparent material for guiding light between the inner part (1) and the outer part (4),
**characterized in that**
• each primary optical element (6) comprises a light-entry end (7) for placement into the inner part (1), and a light-exit end (8) for placement into the outer part (4),
• the inner part (1) comprises at least one light source (9) for illuminating the light-entry end (7) of each primary optical element (6),
• the outer part (4) comprises a secondary optical element (10) from at least partially transparent material, and outcoupling elements (11), wherein
• the secondary optical element (10) comprises a back surface (12) for attachment to the vehicle structural component (3), a front surface (13) for outputting light from the device into an output direction (14), and at least one cavity (15) in the back surface (12) for receiving the light-exit end (8) of at least one primary optical element (6), wherein each cavity (15) is delimited by at least one cavity (15) wall (16) which forms a light-entry surface of the secondary optical element (10), wherein
• the light-exit end (8) of each primary optical element (6) comprises at least one reflection wall (17) for reflecting light from the light-entry end (7) into at least one direction (18) along the back surface (12) of the secondary optical element (10), wherein
• the outcoupling elements (11) extend in at least one direction (18) along the back surface (12) of the secondary optical element (10) for reflecting light incoming from the light-exit end (8) of the primary optical element (6) towards the front surface (13) of the secondary optical element (10).

2. The vehicle illumination device according to claim 1 **wherein** the outcoupling elements (11) are configured to reflect majority of light received from the reflection wall (17) of the primary optical element (6) directly without further reflection out of the device through the front surface (13) of the secondary optical element (10).

3. The vehicle illumination device according to any preceding claim **wherein** the outer part (4) further comprises a shielding element (19) partially covering the secondary optical element (10).

4. The vehicle illumination device according to any preceding claim **wherein** the primary optical element (6) has a main propagation direction (20) which extends from the light source (9) towards a bottom of the cavity (15) during operation of the device, wherein the reflection wall (17) has, at most of its surface area, an inclination angle α with respect to the main propagation direction (20) of between 30 and 75 degrees.

5. The vehicle illumination device according to any preceding claim **wherein** the device comprises at least two primary optical elements (6) in total, wherein the outcoupling elements (11) form multiple outcoupling areas along the back surface (12) of the secondary optical element (10), wherein each outcoupling area corresponds to one primary optical element (6) for reflecting light from the corresponding primary optical element (6) towards the front surface (13) of the secondary optical element (10).

6. The vehicle illumination device according to claim 5 **wherein** at least two different primary optical elements (6) have differently shaped and/or oriented reflection walls (17), for illuminating differently shaped parts of the secondary optical element (10) around the light-exit ends (8) of the different primary optical elements (6).

7. The vehicle illumination device according to any preceding claim **wherein** when viewed from the output direction (14), a part of the secondary optical element (10) around the light-exit end (8) of one primary optical element (6) extends into N directions, where N is a natural number larger than zero, wherein the light-exit end (8) of the primary optical element (6) has N reflection walls (17), each for reflection of light into one of the N directions.

8. The vehicle illumination device according to any preceding claim **wherein** the outcoupling elements (11) are a part of the secondary optical element (10).

9. The vehicle illumination device according to any preceding claim **wherein** the inner part (1) comprises a frame (21), wherein the light source (9) is attached to the frame (21) and the primary optical element (6) is attached to the frame (21).

10. The vehicle illumination device according to any one of claims 1 to 7 **wherein** the light-exit end (8) of the primary optical element (6) extends in at least one direction (18) along the back surface (12) of the secondary optical element (10) wherein the outcoupling elements (11) are a part of the primary optical element (6).

11. The vehicle illumination device according to claim 10 **wherein** the outer part (4) further comprises a homogenization optical element (22) located between a front surface (13) of the light-exit end (8) and the bottom of the cavity (15).

12. The vehicle illumination device according to any preceding claim **wherein** the light-exit end (8) of the primary optical element (6) comprises refractive elements (26) for at least partial refraction of light from the light source (9).

13. Illuminated vehicle structural component comprising an opaque wall and the vehicle illumination device according to any preceding claim **characterized in that** the opaque wall comprises a through hole (25) for each primary optical element (6) of the device, wherein the inner part (1) of the device is attached to an inner side (2) of the component, the outer part (4) of the device is attached to an outer side (5) of the component and each primary optical element (6) passes through a corresponding through hole (25).
